# EUROPÄISCHE PATENTSCHRIFT

(11) **EP 1 708 899 B1**
(45) Veröffentlichungstag und Bekanntmachung des Hinweises auf die Patenterteilung: **12.03.2008**
(21) Anmeldenummer: 04803820.2
(22) Anmeldetag: 13.12.2004
(51) Int. Cl.: B60H 1/00

(54) **STELLVORRICHTUNG UND HEIZUNGS- ODER KLIMATISIERUNGSEINRICHTUNG**
ACTUATING DEVICE AND HEATING OR AIR CONDITIONING UNIT
DISPOSITIF DE REGLAGE ET ENSEMBLE DE CHAUFFAGE OU DE CLIMATISATION

(30) Priorität: 15.01.2004 DE 102004002363
(43) Veröffentlichungstag der Anmeldung: 11.10.2006
(73) Patentinhaber: Behr GmbH & Co. KG, 70469 Stuttgart (DE)
(72) Erfinder: VOIGT, Klaus, 74321 Bietigheim-Bissingen (DE); HEGNER, Hilmar, 71364 Winnenden (DE)
(86) Internationale Anmeldenummer: PCT/EP2004/014191
(87) Internationale Veröffentlichungsnummer: WO 2005/068231

(56) Entgegenhaltungen:
- EP-A- 1 213 165
- DE-A1- 1 575 592
- FR-A- 1 586 367
- FR-A- 2 778 149
- GB-A- 1 352 355
- US-A- 4 858 518

## Beschreibung

Die vorliegende Erfindung betrifft eine Stellvorrichtung für eine Einstellung zumindest zweier Stellelemente sowie eine Heizungs- oder Klimatisierungseinrichtung mit einer solchen Stellvorrichtung.

Bei Heizungs- oder Klimaanlagen insbesondere in Kraftfahrzeugen wird üblicherweise ein gewünschtes Temperaturniveau der in einen Kraftfahrzeuginnenraum geblasenen Luft dadurch eingestellt, dass im Inneren eines Gehäuses der Heizungs- oder Klimatisierungseinrichtung warme und kalte Luft gemischt und das Gemisch aus Ausgängen der Anlage geblasen wird. Das Mischungsverhältnis und damit die Temperatur wird, wie die Luftverteilung auf verschiedene Ausgänge, mittels Luftstromsteuerelementen, beispielsweise eine oder mehrere Klappen, gesteuert, die Luftführungskanäle in einem gewünschten Maße öffnen oder versperren.

Ein solches Luftstromsteuerelement wird mittels einer Stellvorrichtung mit dem Bedienelement eines Bediengeräts eingestellt, wobei die Bewegungen des Bedienelements beispielsweise mittels einer biegsamen Welle auf das Luftstromsteuerelement übertragen werden.

Neben einem bestimmten Temperaturniveau und einer Verteilung der klimatisierten Luft auf unterschiedliche Bereiche des Fahrgastraumes ist in neueren Klimatisierungskonzepten auch eine Möglichkeit der Wahl der Strömungsart der klimatisierten Luft, insbesondere um das Komfortempfinden der Fahrzeuginsassen zu steigern, gegeben. Der Fahrgast kann einzelne Luftausströmer oder Düsen so einstellen, dass die in den Fahrzeuginnenraum geblasene Luft in Form einer stark gerichteten Strömung, einer diffusen Strömung oder auch als Mischung dieser beiden Strömungsarten konditioniert wird.

Stand der Technik ist es, die Verteilung der klimatisierten Luft im Innenraum beispielweise mittels eines Dreh- oder Schiebeschalters am Bediengerät der Klimaanlage einzustellen. Die Wahl der Strömungsart wird direkt am Luftausströmer bzw. an der Düse beispielsweise über ein Wählrad oder einen Schieber eingestellt. Dies wird z.B. in der EP 1 213 165 gezeigt.

Aufgabe der Erfindung ist es, eine Stellvorrichtung und eine Heizungs- oder Klimatisierungseinrichtung mit einer Stellvorrichtung bereitzustellen, bei der sowohl die Luftverteilung als auch die Luftausströmung über ein einzelnes Bedienelement einstellbar ist.

Diese Aufgabe wird durch eine Stellvorrichtung mit den Merkmalen des Anspruchs 1 sowie durch eine Heizungs- und/oder Klimatisierungsanlage mit den Merkmalen des Anspruchs 13 gelöst.

Gemäß Anspruch 1 umfasst eine erfindungsgemäße Stellvorrichtung, zur Einstellung bzw. Verstellung zumindest eines Stellelementes zumindest eines Luftausströmers und zumindest eines zweiten Stellelements zumindest eines Luftstromsteuerelementes in zumindest einem Luftführungskanal in einem Gehäuse einer Heizungs- oder Klimatisierungseinrichtung eines Kraftfahrzeuges, ein Bediengerät mit zumindest einem Bedienelement und zu-mindest zwei Elementen für eine Übertragung der Bewegungen des zumindest einen Bedienelementes des Bediengerätes auf die Stellelemente. Das Bedienelement des Bediengerätes ist vorzugsweise als Dreh- oder Schiebeschalter ausgeführt.

Die Bewegung bzw. die Positionsveränderung zumindest eines Bedienelementes wird über zumindest zwei Übertragungselemente, vorzugsweise Bowdenzüge oder biegsame Wellen auf zumindest ein Stellelement zumindest eines Luftausströmers und auf zumindest ein Stellelement zumindest eines Luftstromsteuerelements übertragen. Das Bedienelement am Bediengerät weist dabei zwei voneinander unabhängige Einstellbereiche auf.

In einem ersten Einstellbereich wird die Bewegung oder die Veränderung der Position des Bedienelements auf zumindest ein Stellelement zumindest eines Luftausströmers übertragen. In einem zweiten Einstellbereich wird die Bewegung oder die Veränderung der Position des Bedienelements auf zumindest ein Verstellelement zumindest eines Luftstromsteuerelements übertragen. Die beiden Einstellbereiche sind voneinander unabhängig, d.h. dass entweder zumindest ein Stellelement zumindest eines Luftausströmers oder zumindest ein Stellelement zumindest eines Luftstromsteuerelements verstellt werden können.

Das Bedienelement am Bediengerät kann in einem ersten Einstellbereich von einer ersten Endstellung "Diffus" über Zwischenstellungen bis zu einer zweiten Endstellung "Spot" verstellt werden. Die Übertragung dieser Einstellung auf zumindest ein Stellelement zumindest eines Luftausströmers führt zu einer Verstellung des zumindest einen Luftaüsströmers in der dieser entsprechend der Einstellung "Diffus" diffuse Luft und entsprechend der Einstellung "Spot" gerichtete Luft bzw. eine Spotströmung in den Innenraum einleitet. In den Zwischenstellungen wird eine der Stellung des Bedienelements entsprechende Mischung aus diffuser und gerichteter. Luftströmung in den Innenraum eingebracht. Vorzugsweise werden hierbei als Luftausströmer Dralldüsen verwendet, mit denen diese Variation der Strömungscharakteristik der Luft erreicht werden kann.

In einem zweiten Einstellbereich kann das Bedienelement am Bediengerät von einer ersten Endstellung "Defrost" über Zwischenstellungen bis zu einer zweiten Endstellung "Fußraum" verstellt werden. Die Übertragung auf zumindest ein Stellelement zumindest eines Luftstromsteuerelements bewirkt eine Verstellung des zumindest einen Luftstromsteuerelements in der dieses entsprechend der Einstellung "Defrost" für eine Belüftung der Frontscheibe und entsprechend der Einstellung "Fußraum" für eine Belüftung des Fußraumes sorgt. In den Zwischenstellungen wird eine der Stellung des Bedienelements entsprechende Mischung aus Frontscheiben- und Fußraumbelüftung erzielt.

Erfindungswesentlich ist es, dass die beiden beschriebenen Einstellmöglichkeiten mittels eines einzelnen Bedienelementes am Bediengerät realisiert werden können. Gemäß einer bevorzugten Ausführungsform der erfindungsgemäßen Stellvorrichtung wird das voneinander unabhängige Ansprech- und Ansteuerverhalten der Stellelemente in den beiden getrennten Einstellbereichen durch eine Kurvenscheibe mit zumindest zwei unterschiedlichen Steuerkurven bewirkt. Das Bedienelement ist mit einer Kurvenscheibe starr verbunden. Vorzugsweise befindet sich auf der Vorder- und der Rückseite der Kurvenscheibe je eine Steuerkurve zur Steuerung der getrennten Bewegung der Bewegungsübertrggungselemente wie beispielsweise der Bowdenzüge oder biegsamen Wellen für die beiden unterschiedlichen Einstellbereiche. In einer vorteilhaften Ausführung der erfindungsgemäßen Stellvorrichtung kann diese Steuerung auch über zumindest zwei Kurvenscheiben mit zumindest jeweils einer Steuerkurve erfolgen:

Gemäß einer bevorzugten Weiterbildung der erfindungsgemäßen Stellvorrichtung, kann zumindest ein Stellelement zumindest eines Luftausströmers und/oder eines Luftstromsteuerelements durch einen Elektromotor als Aktuator angetrieben werden. Bevorzugt kann die Einstellung bzw. Verstellbewegung des Bedienelements am Bediengerät über eine elektronische Positionssensorik erfasst und über elektrische Leitungen an zumindest einen Elektromotor eines Stellelements übertragen werden.

Da der Bauraum im Bereich eines Luftausströmers oder eines Luftstromsteuerelements sehr beschränkt sein kann, können die Antriebsmotoren auch in einer zentralen Motoreinheit zusammengefasst werden, die sich beispielsweise am Gehäuse der Klimatisierungseinrichtung oder an einer beliebigen Stelle, je nach dem zur Vefügung stehenden Bauraum, befindet und von dort mittels Übertragungselementen, wie beispielsweise Bowdenzügen oder biegsamer Wellen die entsprechenden Stellelemente bewegen.

Gemäß einer bevorzugten Weiterbildung wird die erfindungsgemäße, Stellvorrichtung in einer Heizungs- oder Klimatisierungseinrichtung eingesetzt, die zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle

Die Erfindung wird nachfolgend anhand von Ausführungsbeispielen unter Bezugnahme auf die Zeichnungen näher erläutert. Es zeigen:
- Fig. 1:: Eine schematische Ansicht einer Stellvorrichtung für eine Einstellung von Stellelementen gemäß der vorliegenden Erfindung;
- Fig. 2:: Eine schematische Ansicht eines Bediengeräts mit einem Bedienelement gemäß der vorliegenden Erfindung;
- Fig. 3:: Eine schematische Ansicht einer erfindungsgemäßen Anordnung zur Übertragung der Bewegung eines Bedienelements auf die Stelleiemente;
- Fig. 4:: Eine schematische Ansicht einer erfindungsgemäßen Anordnung zur Realisierung einer zentralen Motoreinheit.

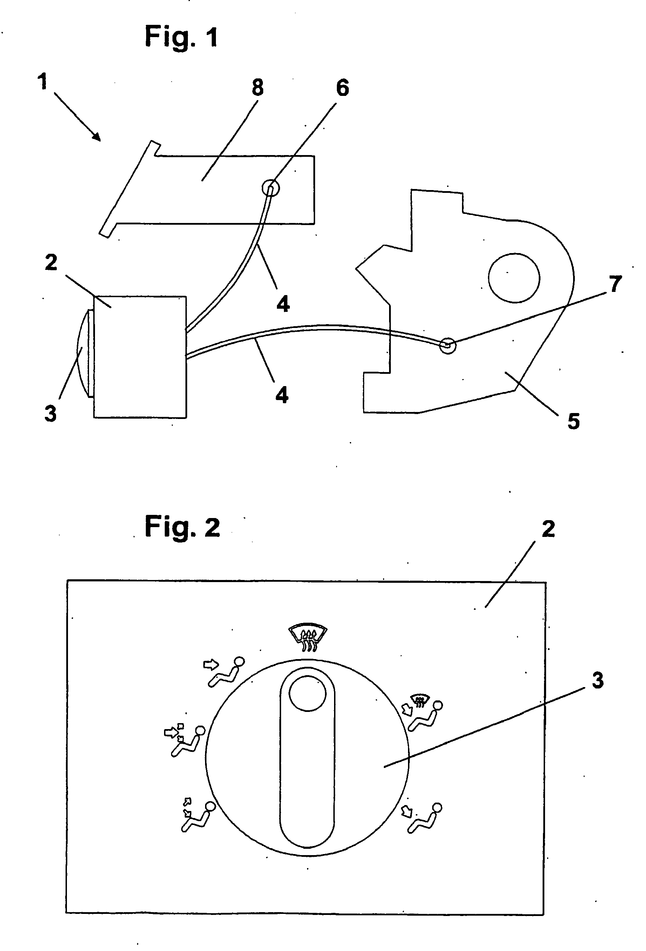

In Fig. 1 ist eine bevorzugte Ausführungsform einer Stellvorrichtung 1 zur Einstellung bzw. Verstellung eines Stellelementes 6 eines Luftausströmers 8 und eines zweiten Stellelements 7 eines Luftstromsteuerelementes in zumindest einem Luftführungskanal in einem Gehäuse einer Heizungs- oder Klimatisierungseinrichtung 5 eines Kraftfahrzeuges, ein Bediengerät 2 mit einem Bedienelement 3 und je einem Element für eine Übertragung 4 der Bewegungen des Bedienelementes 3 des Bediengerätes 2 auf die Stellelemente 6 und 7 gemäß der vorliegenden Erfindung schematisch dargestellt: Das Luftstromsteuerelement und die Luftführungskanäle, die sich im Gehäuse der Heiz- oder Klimatisierungseinrichtung 5 befinden, sind in Fig. 1 nicht dargestellt.

Die Elemente zur Übertragung 4 der Position- oder Positionsveränderung des Bedienelementes 3 auf das Stellelement 6 des Luftausströmers 8 und das Stellelement 7 des Luftstromsteuerelements sind in Form von Bowdenzügen oder biegsamen Wellen ausgeführt.

Fig. 2 zeigt in einer schematischen Darstellung eine Ansicht eines Bediengeräts 2 mit einem Bedienelement 3, das als Drehschalter ausgeführt ist. Das Bedienelement weist zwei getrennte Einstellbereiche auf, deren Funktion und Wirkungsweise im Folgenden erläutert wird.

In einem ersten Einstellbereich (in der Fig. 2 - linke Seite) wird die Bewegung oder die Veränderung der Position des Bedienelements 3 auf das Stellelement 6 des Luftausströmers 8 übertragen.

In einem zweiten Einstellbereich (in der Fig. 2 - rechte Seite) wird die Bewegung oder die Veränderung der Position des Bedienelements 3 auf das Verstellelement 7 des Luftstromsteuerelements übertragen. Die beiden Einstellbereiche sind voneinander unabhängig, d.h., dass entweder das Stettetement 6 des Luftausströmers 8 oder das Stellelement 7 des Luftstromsteuerelements verstellt werden kann.

Das Bedienelement 3 am Bediengerät 2 kann im ersten Einstellbereich von einer Stellung "Diffus" (in Fig. 2 unten links) über Zwischenstellungen bis zu einer Stellung "Spot" (in Fig. 2 oben links) verstellt werden. Die beiden Endstellungen "Diffus" und "Spot" sowie eine Mittelstellung dazwischen sind anhand symbolischer Abbildungen am Bediengerät 2 dargestellt.

Die Übertragung der Verstellbewegung des Bedienelements 3 auf das Stellelement 6 des Luftausströmers 8 führt zu einer Verstellung des Luftausströmers 8. Entsprechend der Einstellung "Diffus" wird der Luftausströmer 8 vom Stellelement 6 so eingestellt, dass die Luft, die in den Fahrzeuginnenraum geleitet wird, eine diffuse Strömungscharakteristik aufweist. Entsprechend der Einstellung "Spot" wird der Luftausströmer 8 vom Stellelement 6 so eingestellt, dass die Luft, die in den Fahrzeuginnenraum geleitet wird, eine gerichtete oder spotförmige Strömungscharakteristik aufweist. Im Bereich dazwischen wird je nach Einstellung des Bedienelements 3 eine entsprechende Mischung aus diffuser und gerichteter Luftströmung in den Innenraum eingeblasen. Vorzugsweise werden hierbei als Luftausströmer 8 Dralldüsen verwendet, mit denen die beschriebene Variation der Strömungscharakteristik erreicht werden kann.

Das Bedienelement 3 am Bediengerät 2 kann im zweiten Einstellbereich von einer Stellung "Defrost" (in Fig. 2 oben Mitte) über Zwischenstellungen bis zu einer Stellung "Fußraum" (in Fig. 2 unten rechts) verstellt werden. Die beiden Endstellungen "Defrost" und "Fußraum" sowie eine Mittelstellung dazwischen sind ebenfalls anhand symbolischer Abbildungen am Bediengerät 2 därgestellt.

Die Übertragung der Verstellbewegung des Bedienelements 3 auf das Stellelement 7 des Luftstromsteuerelements führt zu einer Verstellung des Luftstromsteuerelements. Entsprechend der Einstellung "Defrost" wird das Luftstromsteuerelement vom Stellelement 7 so eingestellt, dass die Frontscheibe des Fahrzeugs maximal belüftet wird. Entsprechend der Einstellung "Fußraum" wird das Luftstfomsteuerelement vom Stellelement 7 so eingestellt, dass der Fußraum des Fahrzeugs maximal belüftet wird. Im Bereich dazwischen wird je nach Einstellung des Bedienelements 3 eine entsprechende Mischung aus Scheiben- und Fußraumbelüftung erzielt.

Erfindungswesentlich ist es, dass diese beiden Einstellmöglichkeiten mittels eines einzelnen Bedienelementes 3 am Bediengerät 2 realisiert werden können.

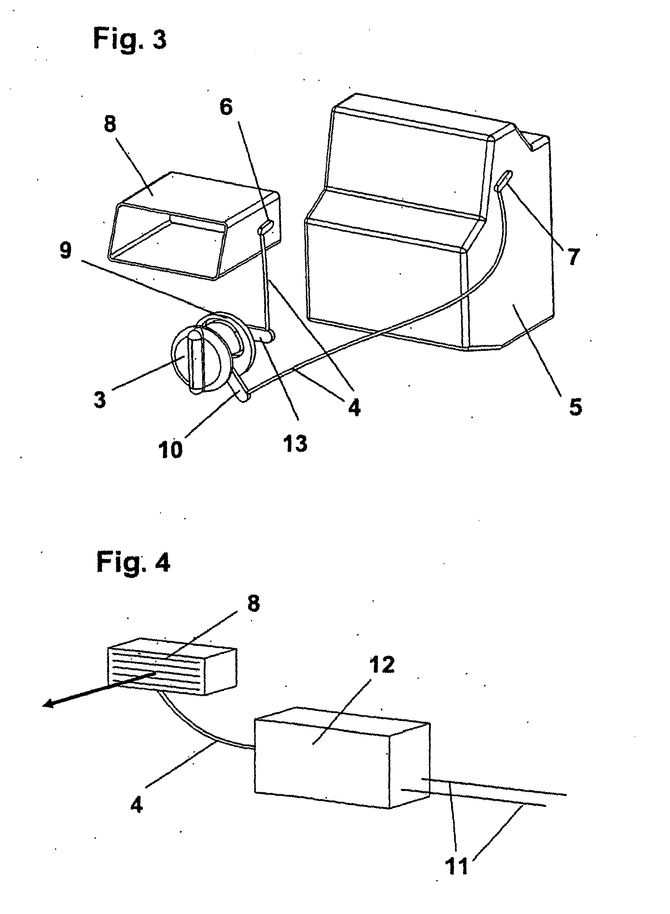

Gemäß einer bevorzugten Ausführungsform der erfindungsgemäßen Stellvorrichtung 1 wird, wie in Fig. 3 dargestellt, das unterschiedliche Ansprech-und Ansteuerverhalten der Stellelemente 6 und 7 in den beiden getrennten Einstellbereichen durch eine Kurvenscheibe 9 mit zwei unterschiedlichen Steuerkurven erzielt. Auf der Vorder- und Rückseite der Kurvenscheibe 9 befindet sich je eine Steuerkurve zur Steuerung der unabhängigen Bewegung der zwei Bewegungsübertragungselemente 4, wie beispielsweise der Bowdenzüge oder biegsamen Wellen, für die beiden unterschiedlichen Einstellbereiche. An einem Hebel 13 der mit dem Übertragungselement 4 zur Verstellung des Stellelements 6 am Luftausströmer 8 verbunden ist, befindet sich ein Stift (in Fig.3 nicht dargestellt), der in die Steuerkurve auf der Rückseite der Steuerescheibe 9 eingreift und von dieser geführt wird. Ebenso befindet sich am Hebel 10, der mit dem Übertragungselement 4 zur Verstellung des Stellelements 7 des Luftstromsteuerelements verbunden ist, ein Stift (in Fig.3 nicht dargestellt), der in die Steuerkurve auf der Vorderseite der Steuerscheibe 9 eingreift und von dieser geführt wird. Die Bewegung der Hebel 13 und 10 und in weiterer Folge der Stellelemente 6 und 7 ist damit vom Bahnverlauf der Steuerkurve abhängig. Während sich der Hebel 13 bzw. das Stellelement 6 bewegt, kann so der andere Hebel 10 bzw. das andere Stellelement 7 ruhen und umgekehrt.

Gemäß einer bevorzugten Weiterbildung der erfindungsgemäßen Stellvorrichtung 1, können die Stellelemente 6 und 7 durch Aktuatoren, insbesondere durch Elektromotore angetrieben werden. Bevorzugt kann die Einstellung bzw. Verstellbewegung des Bedienelements 3 am Bediengerät 2 über eine elektronische Positionssensorik erfasst und über elektrische Leitungen an die Elektromotoren der Stellelemente übertragen werden. Wie in Fig. 4 schematisch dargestellt, sind in einer vorteilhaften Variante der erfindungsgemäßen Stellvorrichtung 1 die Motoren zum Antrieb der Stellelemente 6 und 7 in einer zentralen Motoreinheit 12 zusammengefasst, die sich beispielsweise am Gehäuse der Heiz- oder Klimatisierungseinrichtung 5 oder an einer beliebigen Stelle, je nach dem zur Verfügung stehenden Bauraum, befinden kann und von dort mittels Übertragungselementen 4, wie beispielsweise Bowdenzügen oder biegsamer Wellen die entsprechenden Stellelemente 6 und 7 bewegen.

### Bezugszeichenliste

- 1: Stellvorrichtung
- 2: Bediengerät
- 3: Bedienelement
- 4: Übertragungselement
- 5: Heizungs- oder Klimatisierungseinrichtung
- 6: Stellelement - Luftausströmer
- 7: Stellelement - Luftsteuerelement
- 8: Luftausströmer
- 9: Kurvenscheibe
- 10: Hebel - Luftsteuerelement
- 11: Elektrische Leitung
- 12: Zentrale Motoreinheit
- 13: Hebel - Luftausströmer

## Patentansprüche

1. Stellvorrichtung (1), zur Einstellung zumindest eines Stellelementes (6) zumindest eines Luftausströmers (8), sowie zumindest eines Stellelements (7) zumindest eines Luftstromsteuerelements in zumindest einem Luftführungskanal in einem Gehäuse einer Heizungs- oder Klimatisierungseinrichtung (5) in einem Kraftfahrzeug, mit einem Bediengerät (2) mit zumindest einem Bedienelement (3), zumindest zwei Elementen (4) für eine Übertragung von Bewegungen des Bedienelements (3) auf die Stellelemente (6, 7), **dadurch gekennzeichnet, dass** mit dem zumindest einen Bedienelement (3) des Bediengeräts (2) zumindest ein Stellelement (6) eines Luftausströmers und zumindest ein Stellelement (7) eines Luftstromsteuerelementes verstellbar sind.

2. Stellvorrichtung nach Anspruch 1, **dadurch gekennzeichnet, dass** das zumindest eine Bedienelement (3) des Bediengeräts (2) zumindest zwei voneinander unabhängige Einstellbereiche aufweist.

3. Stellvorrichtung nach Anspruch 1 oder 2, **dadurch gekennzeichnet, dass** durch die Veränderung der Position des zumindest einen Bedienelements (3) in einem ersten Einstellbereich zumindest ein Verstellelement (6) zumindest eines Luftausströmers (8) und in einem zweiten Einstellbereich zumindest ein Verstellelement (7) zumindest eines Luftstromsteuerelements betätigbar sind.

4. Stellvorrichtung nach einem der vorangehenden Ansprüche, **dadurch gekennzeichnet, dass** die Einstellung zumindest eines Stellelements (6) zumindest eines Luftausströmers (8) im ersten Einstellbereich des zumindest einen Bedienelements (3) so veränderbar ist, dass in einer ersten Endstellung diffuse Luft, in Zwischenstellungen eine Mischung aus diffuser und gerichteter Luft und in einer zweiten Endstellung gerichtete Luft oder eine Spotströmung in einen Fahrzeuginnenraum einleitbar ist.

5. Stellvorrichtung nach einem der vorangehenden Ansprüche, **dadurch gekennzeichnet, dass** die Einstellung des Stellelements (7) des Luftstromsteuerelementes im zweiten Einstellbereich des zumindest einen Bedienelements so veränderbar ist, dass in einer ersten Endstellung vorzugsweise die Frontscheibe eines Fahrzeugs, in Zwischenstellungen die Frontscheibe und der Fußraum eines Fahrzeugs und in einer zweiten Endstellung vorzugsweise der Fußraum eines Fahrzeugs belüftbar ist.

6. Stellvorrichtung nach einem der vorangehenden Ansprüche, **dadurch gekennzeichnet, dass** das zumindest eine Bedienelement (3) des Bediengeräts ein Dreh- oder Schiebeschalter ist.

7. Stellvorrichtung nach einem der vorangehenden Ansprüche, **dadurch gekennzeichnet, dass** das Element (4) für eine Übertragung von Bewegungen des zumindest einen Bedienelements des Bediengerätes auf zumindest ein Stellelement zumindest eines Luftausströmers und auf zumindest ein Stellelement zumindest eines Luftstromsteuerelementes ein Bowdenzug oder eine biegsame Welle ist.

8. Stellvorrichtung nach einem der vorangehenden Ansprüche, **dadurch gekennzeichnet, dass** die Ansteuerung für eine Übertragung, von Bewegungen des zumindest einen Bedienelements (3) des Bediengerätes (2) auf zumindest ein Stellelement (6) zumindest eines Luftausströmers (8) und auf zumindest ein Stellelement (7) zumindest eines Luftstromsteuerelementes über zumindest eine Kurvenscheibe (9) mit mindestens einer Steuerkurve erfolgt, vorzugsweise mit einer Kurvenscheibe mit zumindest zwei Steuerkurven oder mit zwei Kurvenscheiben mit zumindest je einer Steuerkurve.

9. Stellvorrichtung nach einem der vorangehenden Ansprüche, **dadurch gekennzeichnet, dass** zumindest ein Stellelement zumindest eines Luftausströmers und/oder zumindest ein Stellelement zumindest eines Luftstromsteuerelementes als Aktuator zumindest einen Elektromotor aufweist.

10. Stellvorrichtung nach einem der vorangehenden Ansprüche, **dadurch gekennzeichnet, dass** die Verstellung oder Einstellung des zumindest einen Bedienelementes des Bediengeräts über eine elektronische Positionssensorik erfasst wird und mittels Übertragungselementen in Form von elektrischen Leitungen an zumindest einen Aktuator zumindest eines Stellelements zumindest eines Luftausströmers und/oder zumindest eines Stellelements zumindest eines Luftstromsteuerelementes übertragbar ist.

11. Stellvorrichtung nach einem der vorangehenden Ansprüche, **dadurch gekennzeichnet, dass** zumindest zwei Aktuatoren der Stellelemente in einer zentralen Einheit (12) zusammengefasst sind und die Stellelemente über Bowdenzüge oder biegsamen Wellen verstellbar sind.

12. Stellvorrichtung nach einem der vorangehenden Ansprüche, **dadurch gekennzeichnet, dass** zumindest ein Luftausströmer (8) als Dralldüse ausgebildet ist.

13. Heizungs- oder Klimatisierungseinrichtung, insbesondere für ein Kraftfahrzeug, **dadurch gekennzeichnet, dass** die Heizungs- oder Klimatisierungseinrichtung zumindest eine Stellvorrichtung gemäß einem der Ansprüche 1 bis 12 enthält.

14. Heizungs- oder Klimatisierungseinrichtung, nach Anspruch 13, **dadurch gekennzeichnet, dass** die Heizungs- oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. An actuating device (1) for setting at least one actuating element (6) of at least one air vent (8), and at least one actuating element (7) of at least one air flow control element in at least one air-guiding duct in a housing of a heating or air conditioning unit (5) in a motor vehicle, with an operating unit (2) having at least one operating element (3), and at least two elements (4) for transmitting movements of the operating element (3) to the actuating elements (6, 7), **characterized in that** at least one actuating element (6) of an air vent and at least one actuating element (7) of an air flow control element can be adjusted with the at least one operating element (3) of the operating unit (2).

2. The actuating device as claimed in claim 1, **characterized in that** the at least one operating element (3) of the operating unit (2) has at least two setting ranges which are independent of each other.

3. The actuating device as claimed in claim 1 or 2, **characterized in that**, by changing the position of the at least one operating element (3), at least one actuating element (6) of at least one air vent (8) can be actuated in a first setting range and at least one actuating element (7) of at least one air flow control element can be actuated in a second setting range.

4. The actuating device as claimed in one of the preceding claims, **characterized in that** the setting of at least one actuating element (6) of at least one air vent (8) in the first setting range of the at least one operating element (3) can be changed in such a manner that, in a first end position, diffuse air can be introduced into a vehicle interior, in intermediate positions a mixture of diffuse and directed air can be introduced and, in a second end position, directed air or a spot flow can be introduced therein.

5. The actuating device as claimed in one of the preceding claims, **characterized in that** the setting of the actuating element (7) of the air flow control element in the second setting range of the at least one operating element can be changed in such a manner that, in a first end position, preferably the windshield of a vehicle can be ventilated, in intermediate positions the windshield and the foot area of a vehicle can be ventilated and, in a second end position, preferably the foot area of a vehicle can be ventilated.

6. The actuating device as claimed in one of the preceding claims, **characterized in that** the at least one operating element (3) of the operating unit is a rotary switch or slide switch.

7. The actuating device as claimed in one of the preceding claims, **characterized in that** the element (4) for transmitting movements of the at least one operating element of the operating unit to at least one actuating element of at least one air vent and to at least one actuating element of at least one air flow control element is a Bowden cable or a flexible shaft.

8. The actuating device as claimed in one of the preceding claims, **characterized in that** the activation for transmitting movements of the at least one operating element (3) of the operating unit (2) to at least one actuating element (6) of at least one air vent (8) and to at least one actuating element (7) of at least one air flow control element takes place via at least one cam disk (9) with at least one radial cam, preferably by means of a cam disk with at least two radial cams or by means of two cam disks each having at least one radial cam.

9. The actuating device as claimed in one of the preceding claims, **characterized in that** at least one actuating element of at least one air vent and/or at least one actuating element of at least one air flow control element has at least one electric motor as actuator.

10. The actuating device as claimed in one of the preceding claims, **characterized in that** the adjustment or setting of the at least one operating element of the operating unit is detected via an electronic position sensor and can be transmitted by means of transmission elements in the form of electric lines to at least one actuator of at least one actuating element of at least one air vent and/or of at least one actuating element of at least one air flow control element.

11. The actuating device as claimed in one of the preceding claims, **characterized in that** at least two actuators of the actuating elements are combined in a central unit (12) and the actuating elements can be adjusted via Bowden cables or flexible shafts.

12. The actuating device as claimed in one of the preceding claims, **characterized in that** at least one air vent (8) is designed as a swirl nozzle.

13. A heating or air conditioning unit, in particular for a motor vehicle, **characterized in that** the heating or air conditioning unit contains at least one actuating device according to one of claims 1 to 12.

14. The heating or air conditioning unit as claimed in claim 13, **characterized in that** the heating or air conditioning unit comprises at least one of the following components: heat exchanger, heating element, evaporator, filter, temperature mixing flap, mixing chamber, one or more flow ducts and one or more control flaps for distributing the air to the outlet ducts.

## Revendications

1. Dispositif de réglage (1) permettant le réglage d'au moins un élément de réglage (6) d'au moins un diffuseur d'air (8), ainsi que d'au moins un élément de réglage (7) d'au moins un élément de commande de flux d'air dans au moins un conduit de passage d'air dans un carter d'un ensemble de chauffage ou de climatisation (5) dans un véhicule automobile, comprenant un organe de commande (2) comportant au moins un élément de commande (3), au moins deux éléments (4) pour une transmission de mouvements de l'élément de commande (3), aux éléments de réglage (6, 7),
**caractérisé en ce qu'**avec l'élément de commande (3) au moins au nombre de un de l'organe de commande (2), on peut régler au moins un élément de réglage (6) d'un diffuseur d'air et au moins un élément de réglage (7) d'un élément de commande de flux d'air.

2. Dispositif de réglage selon la revendication 1, **caractérisé en ce que** l'élément de commande (3), au moins au nombre de un, de l'organe de commande (2) présente au moins deux zones de réglage indépendantes l'une de l'autre.

3. Dispositif de réglage selon la revendication 1 ou 2, **caractérisé en ce que** l'on peut actionner au moins un élément de réglage (6) d'au moins un diffuseur d'air (8), par la modification de la position de l'élément de commande (3), au moins au nombre de un, dans une première plage de réglage, et au moins un élément de réglage (7) d'au moins un élément de commande de flux d'air dans une deuxième plage de réglage.

4. Dispositif de réglage selon l'une quelconque des revendications précédentes, **caractérisé en ce que** le réglage d'au moins un élément de réglage (6) d'au moins un diffuseur d'air (8) dans la première plage de réglage de l'élément de commande (3), au moins au nombre de un, peut être modifié de manière telle que, dans une première position de fin de course, l'on puisse introduire de l'air diffus dans l'habitacle d'un véhicule, dans des positions intermédiaires un mélange d'air diffus et dirigé et, dans une deuxième position de fin de course, de l'air dirigé ou un flux concentré.

5. Dispositif de réglage selon l'une quelconque des revendications précédentes, **caractérisé en ce que** le réglage de l'élément de réglage (7) de l'élément de commande de flux d'air, dans la deuxième plage de réglage de l'élément de commande au moins au nombre de un, est modifiable de manière telle que, dans une première position de fin de course, l'on puisse ventiler de préférence le pare-brise d'un véhicule, dans des positions intermédiaires le pare-brise et l'espace pour les pieds à l'intérieur du véhicule et, dans une deuxième position de fin de course, de préférence l'espace pour les pieds à l'intérieur du véhicule.

6. Dispositif de réglage selon l'une quelconque des revendications précédentes, **caractérisé en ce que** l'élément de commande (3) au moins au nombre de un de l'organe de commande est un commutateur rotatif ou coulissant.

7. Dispositif de réglage selon l'une quelconque des revendications précédentes, **caractérisé en ce que** l'élément (4) prévu pour une transmission de mouvements de l'élément de commande, au moins au nombre de un, de l'organe de commande, à au moins un élément de réglage d'au moins un diffuseur d'air et à au moins un élément de réglage d'au moins un élément de commande de flux d'air, est un câble Bowden ou un flexible.

8. Dispositif de réglage selon l'une quelconque des revendications précédentes, **caractérisé en ce que** la commande prévue pour une transmission de mouvements de l'élément de commande (3), au moins au nombre de un, de l'organe de commande (2), à au moins un élément de réglage (6) d'au moins un diffuseur d'air (8) et à au moins un élément de réglage (7) d'au moins un élément de commande de flux d'air, est réalisée par au moins un disque à cames (9) comprenant au moins une came de commande, de préférence par un disque à cames comprenant au moins deux cames de commande ou par deux disques à cames comprenant chacun au moins une came de commande.

9. Dispositif de réglage selon l'une quelconque des revendications précédentes, **caractérisé en ce qu'**au moins un élément de réglage d'au moins un diffuseur d'air et / ou au moins un élément de réglage d'au moins un élément de commande de flux d'air présente au moins un moteur électrique servant d'actionneur.

10. Dispositif de réglage selon l'une quelconque des revendications précédentes, **caractérisé en ce que** la mise au point ou le réglage de l'élément de commande, au moins au nombre de un, de l'organe de commande est détecté(e) par un ensemble de capteurs électroniques de position, et est transmissible, au moyen d'éléments de transmission, sous la forme de circuits électriques, à au moins un actionneur d'au moins un élément de réglage d'au moins un diffuseur d'air et / ou d'au moins un élément de réglage d'au moins un élément de commande de flux d'air.

11. Dispositif de réglage selon l'une quelconque des revendications précédentes, **caractérisé en ce qu'**au moins deux actionneurs des éléments de réglage sont regroupés dans une unité centrale (12), et les éléments de réglage sont réglables par des câbles Bowden ou par des flexibles.

12. Dispositif de réglage selon l'une quelconque des revendications précédentes, **caractérisé en ce qu'**au moins un diffuseur d'air (8) est conçu comme une buse à effet giratoire.

13. Ensemble de chauffage ou de climatisation, en particulier pour un véhicule automobile, **caractérisé en ce que** l'ensemble de chauffage ou de climatisation comprend au moins un dispositif de réglage conformément à l'une quelconque des revendications 1 à 12.

14. Ensemble de chauffage ou de climatisation selon la revendication 13, **caractérisé en ce que** l'ensemble de chauffage ou de climatisation comprend au moins l'un des composants suivants : un échangeur de chaleur, un radiateur, un évaporateur, un filtre, un volet de mélange de température, une chambre de mélange, un ou plusieurs conduits d'écoulement et un ou plusieurs volets de commande pour la répartition de l'air aux conduits de diffusion.
